# EUROPÄISCHE PATENTSCHRIFT

(11) **EP 4 150 312 B1**
(45) Veröffentlichungstag und Bekanntmachung des Hinweises auf die Patenterteilung: **26.03.2025**
(21) Anmeldenummer: 21731932.6
(22) Anmeldetag: 31.05.2021
(51) Int. Cl.: G01N 1/22, G01N 1/24, G01N 15/06

(54) **PARTIKELSAMMELVORRICHTUNG MIT REINIGUNGSEINHEIT SOWIE REINIGUNGSVERFAHREN FÜR EINE PARTIKELSAMMELVORRICHTUNG**
PARTICLE COLLECTING DEVICE HAVING A CLEANING UNIT, AND CLEANING METHOD FOR A PARTICLE COLLECTING DEVICE
DISPOSITIF DE COLLECTE DE PARTICULES DOTÉ D'UNE UNITÉ DE NETTOYAGE ET PROCÉDÉ DE NETTOYAGE POUR UN DISPOSITIF DE COLLECTE DE PARTICULES

(30) Priorität: 20.08.2020 DE 102020121888
(43) Veröffentlichungstag der Anmeldung: 22.03.2023
(73) Patentinhaber: CleanControlling GmbH, 78576 Emmingen-Liptingen (DE)
(72) Erfinder: BURGER, Volker, 78576 Emmingen-Liptingen (DE)
(74) Vertreter: Patent- und Rechtsanwälte Behrmann Wagner PartG mbB
(86) Internationale Anmeldenummer: PCT/EP2021/064509
(87) Internationale Veröffentlichungsnummer: WO 2022/037813

(56) Entgegenhaltungen:
- WO-A1-2019/187976
- DE-A1- 102017 124 265
- DE-A1- 102018 110 320
- US-A1- 2013 042 893
- CLEANCONTROLLING: "C|PS2 - Partikelsaugextraktionssystem von CleanControlling", YOUTUBE, 30 October 2019 (2019-10-30), pages 1 pp., XP054982213, Retrieved from the Internet <URL:https://www.youtube.com/watch?v=gb2drVcQHq0> [retrieved on 20210909]
- PLAYRIGHTPARENT: "Clean Your Vacuum Cleaner Hose", 29 December 2015 (2015-12-29), pages 1, XP054982223, Retrieved from the Internet <URL:https://www.youtube.com/watch?v=qjQjLxSMkfQ> [retrieved on 20210914]

## Beschreibung

Die Erfindung betrifft eine Partikelsammelvorrichtung gemäß Anspruch 1 zum Sammeln von Partikeln von Oberflächen für eine Partikelanalyse im Rahmen der Prüfung der technischen Sauberkeit von Prüfkörpern, insbesondere Werkstücken, Maschinen und/oder Leiterplatten, in einem Saugbetriebsmodus mit einer Reinigungseinheit. Ferner betrifft die vorliegende Erfindung ein Reinigungsverfahren zum Reinigen einer Partikelsammelvorrichtung.

Aus dem Stand der Technik sind Partikelsammelvorrichtungen zum Erfassen und Dokumentieren der technischen Sauberkeit von Prüfkörpern allgemein bekannt. Die bekannten Partikelsammelvorrichtungen umfassen eine Ansaugleitung zum Ansaugen eines Partikel-/Luftgemisches von der zu prüfenden Oberfläche des Prüfkörpers. Vor dem Erreichen einer Unterdruckquelle durchströmt das angesaugte Partikel-/Luftgemisch eine Partikelsammeleinheit, um die Partikel aus dem Partikel-/Luftgemisch vor dem Erreichen der Unterdruckquelle herauszufiltern.

Eine optische Analyse der in der Partikelsammeleinheit herausgefilterten Partikel in Bezug auf Anzahl, Größe und/oder Beschaffenheit erlaubt dann die technische Sauberkeit des Prüfkörpers zu beurteilen und Rückschlüsse auf die technische Sauberkeit der Produktionsstätte zu ziehen.

Nachteilig bei den bekannten Partikelsammelvorrichtungen sind Ablagerungen der angesaugten Partikel, die sich im Saugbetriebsmodus in der Ansaugleitung und/oder Partikelsammeleinheit festsetzen können. Lösen sich diese abgelagerten Partikel während einer Messung (Prüfung der technischen Sauberkeit) der Partikelsammelvorrichtung, kommt es zu einer negativen Beeinflussung und/oder zu einer Verfälschung des Prüfergebnisses.

Aus diesem Grund ist es beispielsweise aus der DE 10 2018 110 320 A1 der Anmelderin bereits bekannt, dass eine Reinigung einer gattungsbildenden Partikelsammelvorrichtung durch ein Tuch erfolgt, das mit Ethanol getränkt ist und in Kombination mit einem stabförmigen Halteelement zum Reinigen der Ansaugleitung verwendet wird. Nachteilig bei der bekannten Lösung ist ein recht hoher zeitlicher Aufwand, der von einer entsprechend geschulten Bedienperson aufgebracht werden muss, um die Reinigung der Ansaugleitung sowie der Partikelsammeleinheit durchzuführen. Dennoch ist der Reinigungseffekt meist nicht ausreichend, da nicht sämtliche abgelagerte Partikel durch das Tuch entfernt werden können.

Aus der DE 10 2017 124 265 A1 der Anmelderin ist eine Partikelsammelvorrichtung mit einem Fliehkraftabscheider bekannt, an den eine Ansaugleitung derart angeordnet ist, dass ein Teil der gesammelten Partikel im Fliehkraftabscheider rotieren und gegen eine Wandung des Fliehkraftabscheider geschleudert werden. Die restlichen Partikel werden dann mit Unterdruck durch einen Analysefilter geleitet.

Aus der US 2013/0042893 A1 sind Systeme zum Prüfen und Sammeln von Aerosolen bekannt, die mittels Schallreinigung von Partikelrückständen gereinigt werden. Die Reinigung kann in Kombination mit einer Reinigungsflüssigkeit stattfinden.

Aus der WO 2019/187976 A1 ist eine Partikelanalysevorrichtung bekannt, welche einen Reinigungsprozess umfasst. Die Reinigung wird durch ein Reinigungsgas erreicht, welches eine höhere Flussrate als die Flussrate während der Partikelanalyse aufweist.

Weiterer Stand der Technik in Video Form sind zum Beispiel "C|PS2 - Partikelsaugextraktionssystem von CleanControlling" (https://www.y-outube.com/watch?v=gb2drVcQHq0) und "Clean Your Vacuum Cleaner Hose" (https://www.youtube.com/watch?v=qjQjLxSMkfQ).

Ausgehend von dem vorgenannten Stand der Technik ist es somit Aufgabe der vorliegenden Erfindung, die aus dem Stand der Technik bekannten Nachteile zu überwinden. Insbesondere ist es Aufgabe der vorliegenden Erfindung eine Partikelsammelvorrichtung mit einer Reinigungseinheit anzugeben, um bei einem möglichst geringen Zeitaufwand (zeiteffizient) eine gründliche Reinigung einer gattungsbildenden Partikelsammelvorrichtung durchzuführen, um eine negative Beeinflussung und/oder Verfälschung bei der Bestimmung der technischen Sauberkeit unterschiedlicher Messungen (Prüfungen) zu vermeiden.

Diese Aufgabe wird hinsichtlich der Partikelsammelvorrichtung mit den Merkmalen des Anspruchs 1 gelöst.

Ferner wird die Aufgabe durch ein Reinigungsverfahren gemäß des Anspruchs 13 gelöst.

Der Erfindung liegt der Gedanke zugrunde, eine gattungsbildende Partikelsammelvorrichtung zum Sammeln von Partikeln von Oberflächen eines Prüfkörpers in einem Saugbetriebsmodus der Partikelsammelvorrichtung für eine Partikelanalyse im Rahmen der Prüfung der technischen Sauberkeit von Prüfkörpern, insbesondere Werkstücken, Maschinen und/oder Leiterplatten, durch eine erfindungsgemäße Reinigungseinheit in einem Spülbetriebsmodus mit einer Reinigungsflüssigkeit zu reinigen. Die Partikelsammelvorrichtung umfasst eine Ansaugleitung, die zum Ansaugen eines Partikel-/Luftgemisches von der zu prüfenden Oberfläche des Prüfkörpers ausgebildet ist. Vor dem Erreichen einer Unterdruckquelle durchströmt das Partikel-/Luftgemisch eine Partikelsammeleinheit zum Herausfiltern der Partikel, die dann in einem nachgelagerten und/oder unabhängigen Arbeitsschritt, insbesondere durch optische Analysemittel ausgewertet werden, um die technische Sauberkeit zu bestimmen.

Im Rahmen der vorliegenden Erfindung ist es nun vorgesehen, dass die Partikelsammelvorrichtung die Reinigungseinheit umfasst, die dahingehend ausgebildet ist, dass in dem Spülbetriebsmodus der Partikelsammelvorrichtung die Partikelsammelvorrichtung, also insbesondere die das Partikel-/Luftgemisch führenden Baugruppen, konkret die Ansaugleitung und die Partikelsammeleinheit, durch das Ansaugen der Reinigungsflüssigkeit so durchspülbar ist/sind, dass sich festgesetzte und/oder abgelagerte Partikel aus der Partikelsammelvorrichtung, insbesondere aus der Ansaugleitung und der Partikelsammeleinheit, herausspülen und/oder ausschwemmen lassen.

Als Reinigungsflüssigkeit wird bevorzugt eine wässrige Lösung, besonders bevorzugt demineralisiertes Wasser (VE-Wasser) eingesetzt. Vorteilhaft ermöglicht die erfindungsgemäß ausgebildete Partikelsammelvorrichtung das Durchführen einer automatisierten Reinigung, wobei vorteilhaft die Unterdruckquelle der Partikelsammelvorrichtung, also die Fähigkeit der Partikelsammelvorrichtung ein Luftgemisch bzw. ein Fluidgemisch anzusaugen, auch für die erfindungsgemäße Reinigung genützt wird, da anstelle des Partikel-/Luftgemisches im Saugbetriebsmodus der Partikelsammelvorrichtung nun eine Reinigungsflüssigkeit angesaugt wird. Vorteilhaft durchströmt die Reinigungsflüssigkeit die Partikelsammelvorrichtung vollständig, weshalb sich die erfindungsgemäße Reinigung als äußerst gründlich erweist und zudem zeiteffizient durchführbar ist.

Vorteilhafte Weiterbildungen der Erfindung sind in den Unteransprüchen angegeben. **In** den Rahmen der Erfindung fallen sämtliche Kombinationen aus zumindest zwei von der in der Beschreibung, den Ansprüchen und/oder Figuren offenbarten Merkmalen. Ferner sollen vorrichtungsoffenbarte Merkmale auch im Rahmen des Verfahrens beanspruchbar sein und umgekehrt.

Weiterbildend ist es im Rahmen der vorliegenden Erfindung vorgesehen, dass die Partikelsammelvorrichtung insgesamt zwei Partikelsammeleinheiten umfasst. **In** diesem Zusammenhang ist bevorzugt vorgesehen, wenn die erste Partikelsammeleinheit als ein Filterhalter zur Aufnahme eines austauschbaren Analysefilters oder alternativ als ein Fliehkraftabscheider (Zyklon) ausgebildet ist. Durch den Fliehkraftabscheider können die im Saugbetriebsmodus der Partikelsammelvorrichtung von der Ansaugleitung angesaugten Partikel durch das Ausbilden eines Zyklons aus dem Partikel-/Luftgemisch herausgefiltert werden, da aufgrund der Gewichtskraft auf die Partikel eine Zentrifugalkraft wirkt.

Ferner ist es bevorzugt vorgesehen, dass die zweite Partikelsammeleinheit der Partikelsammelvorrichtung als Filterhalter ausgebildet ist, und, wie bereits erwähnt, dass der Filterhalter zum Halten eines austauschbaren Analysefilters ausgebildet ist, um die Partikel des Partikel-/Luftgemisches beim Durchströmen des Analysefilters auf einer Partikelsammelfläche des Analysefilters herauszufiltern.

Vorteilhaft ermöglicht ein zweistufiger Filter in der Partikelsammelvorrichtung, der insbesondere durch einen Fliehkraftabscheider und den saugluftleitend dahinter angeordneten Filterhalter ausgebildet ist, dass die Mess- und/oder Prüfzeit (Zeitraum bzw. Messzeitspanne) der Partikelsammelvorrichtung in Bezug auf einen einstufigen Filter verlängert werden kann, da insbesondere größere Partikel, auf die eine größere Zentrifugalkraft wirkt, im Fliehkraftabscheider herausgefiltert werden können und kleiner Partikel beim Durchströmen des Analysefilters in Abhängigkeit einer gewählten Porendichte des Analysefilters aus dem Partikel-/Luftgemisch herausfilterbar sind. Gerade in diesem Zusammenhang ist die erfindungsgemäße Ausgestaltung der Partikelsammelvorrichtung mit der Reinigungseinheit besonders vorteilhaft, da sämtliche Partikelsammeleinheiten beim Ansaugen der Reinigungsflüssigkeit durchspülbar sind. Dies ermöglicht in Bezug auf den Stand der Technik ein zusätzliches Ersparnis an Zeit, die für das Durchführen der Reinigung von einer Bedienperson aufgebracht werden muss.

Weiterbildend ist vorgesehen, dass der Fliehkraftabscheider mit der Ansaugleitung saugluftleitend verbunden ist, wobei in dem Saugbetriebsmodus der Partikelsammelvorrichtung das angesaugte Partikel-/Luftgemisch im Fliehkraftabscheider rotiert und somit die Partikel gegen eine Wandung des Fliehkraftabscheiders geschleudert werden, wodurch sie abgebremst und somit insbesondere vom nach oben durch ein Tauchrohr ausströmenden Partikel-/Luftgemisch abgeschieden werden. Ferner ist es hierbei bevorzugt vorgesehen, dass der Fliehkraftabscheider unterseitig eine Aufnahme umfasst, die insbesondere als eine Gewindeverbindung ausgebildet ist und die so ausgestaltet ist, dass unterseitig des Fliehkraftabscheiders ein Auffangbehälter zum Sammeln der abgeschiedenen und aus dem Fliehkraftabscheider herausrieselnden Partikel anordnenbar ist, wobei sich der Auffangbehälter insbesondere für die Durchführung einer optischen Analyse der Partikel von dem Fliehkraftabscheider lösen lässt.

Ferner ist es in diesem Zusammenhang weiterbildend auch vorgesehen, dass der Fliehkraftabscheider ein vertikal ausgerichtetes Tauchrohr umfasst, an dem eine Unterdruckversorgungsleitung so angeschlossen ist, dass in dem Saugbetriebsmodus und dem Spülbetriebsmodus das angesaugte Fluid (Luftgemisch oder Reinigungsflüssigkeit) durch die Unterdruckversorgungsleitung zur Unterdruckquelle strömt, wobei vor dem Erreichen der Unterdruckquelle der Filterhalter durchströmt wird.

Weiterbildend ist die Ansaugleitung zum Fliehkraftabscheider lösbar ausgebildet. Ferner ist in diesem Zusammenhang auch die Unterdruckversorgungsleitung zumindest zum Filterhalter lösbar ausgebildet, wobei die Ansaugleitung so eingerichtet ist, dass sie zur Unterdruckversorgungsleitung austauschbar ist. Vorteilhaft ermöglicht dies das saugluftleitende Verbinden der Ansaugleitung mit dem Filterhalter, wobei dann bei einer derart gewählten Konfiguration der erfindungsgemäßen Partikelsammelvorrichtung ein Saugbetriebs- und/oder ein Spülbetriebsmodus der Partikelsammelvorrichtung auch nur mit einem Filterhalter durchgeführt werden kann. Bei einer derartigen Betriebsart kommt es also zu einem saugluftleitenden Überbrücken des Fliehkraftabscheiders, um, beispielsweise eine Prüfung der technischen Sauberkeit von Prüfkörpern, die wenige und/oder nur kleine Partikel umfassen, nur mit dem Filterhalter als Partikelsammeleinheit zu messen und/oder den Spülbetriebsmodus durchzuführen.

Ferner ist es weiterbildend vorgesehen, dass die Reinigungseinheit eine Flüssigkeitsvorratseinheit umfasst, die zum Bereitstellen einer Reinigungsflüssigkeit, insbesondere von Wasser, einer wässrigen Lösung oder demineralisiertem Wasser (VE-Wasser), ausgebildet ist und die bevorzugt lösbar zur Partikelsammelvorrichtung ausgebildet ist oder sogar als separates bzw. eigenständiges Bauteil zur Partikelsammelvorrichtung ausgestaltet und/oder dimensioniert ist. Ferner ist es in diesem Zusammenhang bevorzugt vorgesehen, dass die Flüssigkeitsvorratseinheit ein Fassungsvermögen von insgesamt 5l, bevorzugt 3l, besonders bevorzugt 2l, ganz besonders bevorzugt 1l umfasst. Vorteilhaft kann somit der Spülbetriebsmodus an einem beliebigen Einsatzort der Partikelsammelvorrichtung (Messort) durchgeführt werden, da die Reinigungsflüssigkeit durch die Flüssigkeitsvorratseinheit stets zugriffsbereit ist.

Weiterbildend ist es ferner bevorzugt vorgesehen, dass die Flüssigkeitsvorratseinheit so mit der Ansaugleitung in Wirkverbindung steht, dass die Reinigungsflüssigkeit in dem Spülbetriebsmodus mittels der Ansaugleitung ansaugbar ist. Vorteilhaft lässt sich hierbei der normale Betrieb und/oder die normale Funktionalität der Partikelsammelvorrichtung im Saugbetriebsmodus auch für die Reinigung (Durchführung des Spülbetriebsmodus) der Partikelsammelvorrichtung nutzen, da anstelle eines Partikel-/Luftgemisches nun die Reinigungsflüssigkeit durch die Ansaugleitung ansaugbar ist, um somit die Ansaugleitung sowie die erste und/oder die zweite Partikelsammeleinheit durch das Durchströmen der Reinigungsflüssigkeit zu reinigen, um Ablagerungen von Partikeln aus der Partikelsammelvorrichtung auszuspülen.

Weiterbildend ist es im Rahmen der vorliegenden Erfindung vorgesehen, dass die Reinigungseinheit eine Adaptereinheit umfasst, die zum lösbaren Verbinden mit dem Fliehkraftabscheider ausgebildet ist. Hierfür wird bevorzugt die Aufnahme des Fliehkraftabscheiders genutzt, um den Auffangbehälter durch die Adaptereinheit zu ersetzen, um diese somit in Wirkkontakt mit dem Fliehkraftabscheider und/oder der Partikelsammelvorrichtung zu bringen. Vorteilhaft kann durch die Adaptereinheit Einfluss auf den Fliehkraftabscheider genommen werden, der aufgrund des mittig endenden Tauchrohrs eine Wanne ausbildet, in der sich die Reinigungsflüssigkeit im Spülbetriebsmodus aufstaut.

Weiterbildend ist es in diesem Zusammenhang bevorzugt vorgesehen, dass die Adaptereinheit ein schaltbares Ventil aufweist, das in einem Verbindungsschlauch angeordnet ist, wobei der Verbindungsschlauch einseitig fluidleitend mit der Adaptereinheit in Wirkverbindung steht und wobei das Ventil zwischen einem fluidleitenden Zustand und einem fluidsperrenden Zustand verschaltbar ist. Vorteilhaft kann somit über den Schaltzustand des Ventils die Funktionalität des Verbindungsschlauchs und somit auch der Adaptereinheit beeinflusst werden, um insbesondere im Fliehkraftabscheider aufgestaute Reinigungsflüssigkeit im fluidleitenden Zustand des Ventils abzuleiten.

Ferner ist es zudem vorgesehen, dass der Verbindungsschlauch im fluidleitenden Zustand des Ventils einen fluidleitenden Kanalabschnitt zwischen dem Fliehkraftabscheider und der Unterdruckquelle, insbesondere dem Filterhalter ausbildet, wobei insbesondere das Ventil im Spülbetriebsmodus im fluidsperrenden Zustand verschaltet ist. Vorteilhaft ermöglicht eine derartige Ausgestaltung das Absaugen der Reinigungsflüssigkeit, für den Fall, dass das Ventil in den fluidleitenden Zustand verschaltet ist, da das freie Ende des Verbindungsschlauches mit der Unterdruckquelle in Wirkverbindung steht.

Zudem sieht eine weitere Ausgestaltung der Reinigungseinheit einen Membransaugendabschnitt vor, der dahingehend ausgebildet ist, dass er sich saugluftleitend mit einem Endabschnitt der Ansaugleitung verbinden lässt, wobei in einem verbundenen Zustand des Membransaugendabschnitts von der Ansaugleitung nur noch (reine) Luft ansaugbar ist. Konkret realisiert wird dies, da durch das Aufstecken und/oder saugluftleitende Verbinden des Membransaugendabschnitts mit der Ansaugleitung eine Ansaugöffnung der Ansaugleitung vollständig durch eine luftdurchlässige Membran des Membransaugendabschnitts abgedeckt wird. Vorteilhaft ermöglicht dies das Realisieren eines bevorzugten Trockenbetriebsmodus, indem durch das Aktivieren der Unterdruckquelle ein Luftgemisch ansaugbar ist, wobei durch die luftdurchlässige Membran sichergestellt werden kann, dass keine Partikel aus der Umgebung angesaugt werden. Vorteilhaft ermöglicht dies das Entfernen und/oder Ableiten von Flüssigkeitsrückständen in der Partikelsammelvorrichtung. Bevorzugt ist im Trockenbetriebszustand zudem auch das Ventil in den fluidleitenden Zustand verschaltet, um somit im Fliehkraftabscheider aufgestaute Flüssigkeit abzuleiten. Es wird nochmals darauf hingewiesen, dass es bevorzugt vorgesehen ist, dass der Membransaugendabschnitt im Spülbetriebsmodus entweder nicht mit der Ansaugleitung saugluftleitend verbunden ist oder über einen parallelen Kanalabschnitt saugluftleitend überbrückbar ist.

Zudem sieht eine weitere bevorzugte Ausgestaltung der Partikelsammelvorrichtung eine Konfiguration vor, in der die Partikelsammelvorrichtung Steuermittel umfasst, die dahingehend ausgebildet sind, dass in dem Spülbetriebsmodus das Ventil in den fluidsperrenden Zustand verschaltet ist und die Reinigungsflüssigkeit, insbesondere 1l der Reinigungsflüssigkeit, aus der Flüssigkeitsvorratseinheit durch die Ansaugleitung ansaugbar ist zum Durchspülen der Partikelsammelvorrichtung, insbesondere der das Partikel-/Luftgemisch führenden Baugruppen, insbesondere der Ansaugleitung, des das Tauchrohr umfassenden Fliehkraftabscheiders, der Unterdruckversorgungsleitung und/oder des Filterhalters und dass in dem Trockenbetriebsmodus das Ventil in den fluidleitenden Zustand verschaltet ist, und Luft von der Ansaugleitung durch den Membransaugendabschnitt ansaugbar ist.

Zudem wird im Rahmen der vorliegenden Erfindung auch Schutz für ein Reinigungsverfahren beansprucht, das zum Reinigen einer Partikelsammelvorrichtung zum Sammeln von Partikeln von Oberflächen für eine Partikelanalyse im Rahmen der Prüfung der technischen Sauberkeit von Prüfkörpern, insbesondere Werkstücken, Maschinen und/oder Leiterplatten ausgebildet ist und die folgenden Verfahrensschritte aufweist:
In einem ersten Verfahrensschritt wird eine Reinigungseinheit in Wirkkontakt mit der Partikelsammelvorrichtung gebracht. Anschließend wird ein Spülbetriebsmodus der Partikelsammelvorrichtung aktiviert, wobei eine Ansaugleitung der Partikelsammelvorrichtung zum Ansaugen eines Partikel-/Luftgemisches im Saugbetriebsmodus sowie eine Partikelsammeleinheit zum Herausfiltern der Partikel des Partikel-/Luftgemisches im Saugbetriebsmodus durch das Ansaugen einer Reinigungsflüssigkeit durchspült wird, um Rückstände von Partikeln und/oder abgelagerte Partikel aus der Partikelsammelvorrichtung herauszuspülen.

Weiterbildend ist es in diesem Zusammenhang vorgesehen, dass ein Fliehkraftabscheider der Partikelsammelvorrichtung und/oder ein Filterhalter der Partikelsammelvorrichtung mit der Reinigungsflüssigkeit durchspült wird, um die festgesetzten Partikel herauszuspülen.

Ferner wird im Rahmen der vorliegenden Erfindung weiterbildend auch Schutz für ein Verfahren beansprucht, das die folgenden Verfahrensschritte umfasst.

Zunächst erfolgt in einem ersten Verfahrensschritt das Entfernen eines austauschbaren Analysefilters aus dem Filterhalter. Anschließend wird die Ansaugleitung in eine eine Reinigungsflüssigkeit aufweisende Flüssigkeitsvorratseinheit eingetaucht, um in einem Spülbetriebsmodus die Reinigungsflüssigkeit mit der Ansaugleitung abzusaugen. **In** einem weiteren Verfahrensschritt wird eine Adaptereinheit mittels einer Aufnahme des Fliehkraftabscheiders in Wirkkontakt mit dem Fliehkraftabscheider gebracht. Zudem wird dann ein freies Ende eines Verbindungsschlauchs, das anderenends mit der Adaptereinheit fluidleitend gekoppelt ist, mit der Unterdruckquelle, insbesondere mit dem Filterhalter in Wirkkontakt gebracht. Zudem wird ein Ventil, das in dem Verbindungsschlauch angeordnet ist, in einen fluidsperrenden Zustand verschaltet.

Anschließend erfolgt in einem weiteren Verfahrensschritt das Aktivieren des Spülbetriebsmodus der Partikelsammelvorrichtung, wobei hier die Reinigungsflüssigkeit durch die Ansaugleitung angesaugt wird und in den Fliehkraftabscheider einströmt und von dort zum Teil über das Tauchrohr und die Unterdruckversorgungsleitung den Filterhalter durchströmt. Nach dem Ansaugen der Reinigungsflüssigkeit, insbesondere nach 1l der Reinigungsflüssigkeit, wird der Spülbetriebsmodus durch das Deaktivieren der Unterdruckquelle deaktiviert.

Anschließend wird ein Membransaugendabschnitt mit der Ansaugleitung verbunden, damit Luft von der Ansaugleitung nur noch durch die luftdurchlässige Membran des Membransaugendabschnitts ansaugbar ist. In einem weiteren Verfahrensschritt wird das Ventil in den fluidleitenden Zustand verschaltet, bevor dann der Trockenbetriebsmodus zum Absaugen von Flüssigkeitsrückständen aus der Partikelsammelvorrichtung durch das Aktvieren des Saugbetriebsmodus der Partikelsammelvorrichtung aktiviert wird, um Flüssigkeitsrückstände aus der Partikelsammelvorrichtung und insbesondere aus dem eine Wanne ausbildenden Fliehkraftabscheider über den Verbindungsschlauch abzupumpen. Schließlich erfolgt das Deaktivieren des Trockenbetriebsmodus.

Ferner ist es weiterbildend vorgesehen, dass das Reinigungsverfahren zum Reinigen einer erfindungsgemäßen Partikelsammelvorrichtung eingesetzt wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a, Fig. 1b:: eine schematisierte Darstellung einer bevorzugten Ausführungsform der erfindungsgemäßen Partikelsammelvorrichtung, die eine Reinigungseinheit umfasst, um Partikelrückstände aus der Partikelsammelvorrichtung auszuspülen und in
- Fig. 2a, Fig. 2b:: eine weitere schematisierte Darstellung der aus den Fig. 1 a/b bekannten Partikelsammelvorrichtung, wobei nunmehr eine Reinigung nur von der Ansaugleitung sowie dem Filterhalter erfolgt.

**In** den Figuren sind gleiche Elemente und Elemente mit der gleichen Funktion mit den gleichen Bezugszeichen gekennzeichnet.

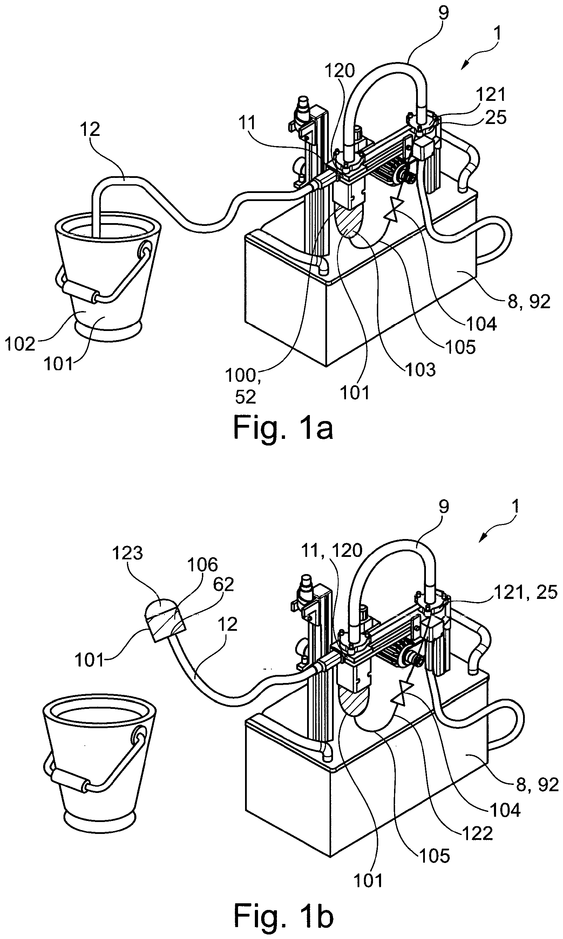

**In** der Fig. 1a ist eine schematisierte Darstellung einer Partikelsammelvorrichtung 1 zum Sammeln von Partikeln von Oberflächen für eine Partikelanalyse im Rahmen der Prüfung der technischen Sauberkeit von Prüfkörpern, insbesondere Werkstücken, Maschinen und/oder Leiterplatten, gemäß einer bevorzugten Ausführungsform der vorliegenden Erfindung dargestellt.

Die dargestellte Partikelsammelvorrichtung 1 umfasst eine Reinigungseinheit 101, die mit der Partikelsammelvorrichtung 1 in Wirkkontakt steht. Die Partikelsammelvorrichtung 1 umfasst für einen Saugbetriebsmodus zum Ansaugen eines Partikel-/Luftgemisches von der Oberfläche des Prüfkörpers eine erste Partikelsammeleinheit 120, die als Fliehkraftabscheider 11 ausgebildet ist sowie eine als Filterhalter 25 ausgebildete zweite Partikelsammeleinheit 121. Der Filterhalter 25 ist zur Aufnahme eines austauschbaren Analysefilters ausgebildet ist, wobei in dem Saugbetriebsmodus das Partikel-/Luftgemisch den Analysefilter vor dem Erreichen einer Unterdruckquelle 8 durchströmt, um die Partikel auf einer von dem Analysefilter ausgebildeten Partikelsammelfläche abzuscheiden.

Ferner umfasst die Reinigungseinheit 101 eine Adaptereinheit 103, die über eine als Gewindeverbindung 52 ausgebildete Aufnahme 100 mit dem Fliehkraftabscheider 11 in Wirkkontakt steht. Die Adaptereinheit 103 umfasst einen figürlich schematisiert dargestellten Verbindungsschlauch 105, der ein schaltbares Ventil 104 aufweist, das zwischen einem fluidleitenden Zustand und einem fluidsperrenden Zustand verschaltet werden kann. Der Verbindungsschlauch 105 ist fluidleitend neben der Adaptereinheit 103 auch mit dem Filterhalter 25 kontaktiert, weshalb der Verbindungsschlauch 105 mit der Unterdruckquelle 8 in Wirkverbindung steht, wobei vorliegend die Unterdruckquelle 8 durch einen Nass-Staubsauger ausgebildet 92 ist.

Ferner umfasst die dargestellte Reinigungseinheit 101 eine Flüssigkeitsvorratseinheit 102, die grafisch schematisiert durch einen Eimer dargestellt ist, der eine Reinigungsflüssigkeit zum Durchführen des erfindungsgemäßen Spülbetriebsmodus umfasst.

Beim Durchführen der Reinigung der Partikelsammelvorrichtung 1 wird zunächst die Ansaugleitung 12 in die Reinigungsflüssigkeit der Flüssigkeitsvorratseinheit 102 eingetaucht. Anschließend wird das Ventil 104 in den fluidsperrenden Zustand verschaltet, um sicherzustellen, dass keine Reinigungsflüssigkeit über den Verbindungsschlauch 105 fließen kann.

Anschließend wird der Spülbetriebsmodus der Partikelsammelvorrichtung 1 aktiviert, indem die Unterdruckquelle 8 aktiviert wird, wobei - wie bereits erwähnt - die Unterdruckquelle 8 in der vorliegenden Ausführungsform der erfindungsgemäßen Partikelsammelvorrichtung 1 durch einen Staubsauger 92 ausgebildet ist. Das Einschalten des Staubsaugers 92 führt dazu, dass von der Ansaugleitung 12 die Reinigungsflüssigkeit angesaugt wird, die in den Fliehkraftabscheider 11 einströmt und von dort über das Tauchrohr und die Unterdruckversorgungsleitung den Filterhalter 25, der keinen Analysefilter umfasst, durchströmt.

Vorteilhaft werden von der Reinigungsflüssigkeit festgesetzte und/oder abgelagerte Partikel aus der Partikelsammelvorrichtung herausgespült. Nach dem Durchströmen der Unterdruckversorgungsleitung 9 bzw. des Filterhalters 25 wird die Reinigungsflüssigkeit in einer nicht sichtbaren Vorratseinheit des Staubsaugers 92 gesammelt.

Ferner wurde durch unterschiedliche Untersuchungen und Messungen herausgefunden, dass durch den vorteilhaften Einsatz der Adaptereinheit 103 eine Gesamtmenge von etwa 1l Reinigungsflüssigkeit zum vollständigen Reinigen der Partikelsammelvorrichtung 1 ausreichend ist. Vorteilhaft ist in diesem Zusammenhang zu erwähnen, dass somit mehrere Spülvorgänge zum Reinigen der Partikelsammelvorrichtung 1 durchgeführt werden können, bevor die vom Staubsauger 92 ausgebildete Vorratseinheit vollständig mit der Reinigungsflüssigkeit gefüllt ist. Hierdurch kann vorteilhaft an einem beliebigen Eisatzort zwischen Prüfungen zur Bestimmung der technischen Sauberkeit mehrere Spülbetriebsmodi durchgeführt werden.

Nach dem Durchführen des Spülbetriebsmodus der Partikelsammelvorrichtung 1 erfolgt das Durchführen eines Trockenbetriebsmodus der Partikelsammelvorrichtung 1 was schematisiert in der Fig. 1b dargestellt ist.

Zum Durchführen des Trockenbetriebsmodus, der bevorzugt zeitlich unmittelbar dem Spülbetriebsmodus folgt, muss zunächst der Staubsauger 92 deaktiviert werden, um den Saugbetriebsmodus bzw. den Spülbetriebsmodus zu beenden. Anschließend wird ein Membransaugendabschnitt 106 so endseitig zur Ansaugleitung 12 verbunden, dass die Ansaugöffnung 62 der Ansaugleitung 12 vollständig von einer luftdurchlässigen Membran 123 des Membransaugendabschnitts 106 abgedeckt ist.

Nach dem saugluftleitenden Verbinden des Membransaugendabschnitts 106 wird das Ventil 104 in den fluidleitenden Zustand verschaltet. Dann folgt das Einschalten des Staubsaugers 92 zum Aktivieren der Unterdruckquelle 8.

Durch die kleinporige Membran 123 des Membransaugendabschnitts 106 wird sichergestellt, dass in dem Trockenbetriebsmodus der Partikelsammelvorrichtung 1 von der Ansaugleitung 12 lediglich reine Luft angesaugt wird, da aufgrund der Membran 123 keine zusätzlichen Partikel aus der Umgebung ansaugbar sind. Ferner ist im Trockenbetriebsmodus das Ventil 104 des Verbindungsschlauchs 105 in den fluidleitenden Zustand verschaltet, um einen fluidleitenden Kanalabschnitt 122 auszubilden. Dies führt dazu, dass auch durch den Verbindungsschlauch 105 Reinigungsflüssigkeit absaugbar ist, um die im Fliehkraftabscheider 11 aufgrund der baulichen Ausgestaltung aufgestaute Reinigungsflüssigkeit vollständig abzuleiten. Neben der im Fliehkraftabscheider 11 aufgestauten Reinigungsflüssigkeit werden im Trockenbetriebsmodus auch sämtliche Flüssigkeitsrückstände aus der Partikelsammelvorrichtung 1 abgeführt, weshalb unmittelbar nach dem Beenden des Trockenbetriebsmodus der Partikelsammelvorrichtung 1 ein neuer Saugbetriebsmodus zur Bestimmung der technischen Sauberkeit durchführbar ist, ohne dass zu befürchten ist, dass sich innerhalb der Partikelsammelvorrichtung 1 aufgrund von Flüssigkeitsrückständen feuchte Partikelklumpen ausbilden.

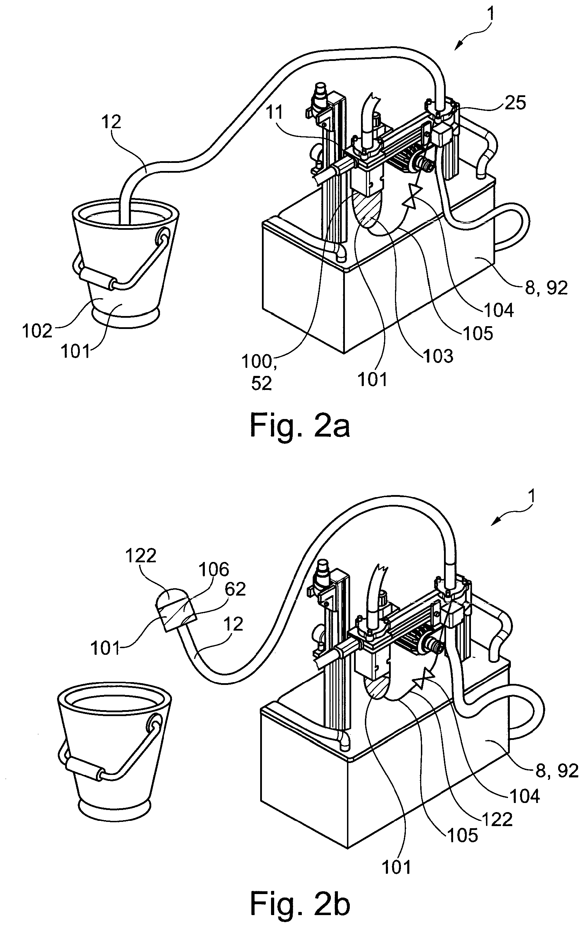

In der Fig. 2a und 2b ist die aus der Fig. 1a und 1b bekannte Partikelsammelvorrichtung 1 dargestellt, wobei es lediglich zu einem Reinigen der Ansaugleitung 12 sowie des Filterhalters 25 kommt. Eine entsprechende Reinigung ist immer dann vorteilhaft, wenn zuvor Oberflächen mit wenigen und/oder kleinen Partikeln analysiert wurden, da hier im Saugbetriebsmodus der zum Herausfiltern von großen Partikeln vorgesehene Fliehkraftabscheider 11 saugluftleitend überbrückt wird, indem die Ansaugleitung 12 anstelle mit dem Fliehkraftabscheider 11 nunmehr direkt mit dem Filterhalter 25 saugluftleitend verbunden wird.

Auch hier erfolgt die Reinigung zunächst in einem Spülbetriebsmodus, der in der Fig. 2a schematisiert dargestellt ist und in dem Reinigungsflüssigkeit aus einer Flüssigkeitsvorratseinheit 102 über die Ansaugleitung 12 angesaugt wird.

Nach dem Durchführen des Spülbetriebsmodus wird dann auch, wie schematisiert in der Fig. 2b dargestellt, die Ansaugleitung 12 mit dem Membransaugendabschnitt 106 verbunden, um zu verhindern, dass in dem folgenden Trockenbetriebsmodus weiter Partikel aus der Umgebung angesaugt werden.

Im Ergebnis ermöglicht die vorliegende Erfindung auf überraschend einfache Art und Weise eine gattungsbildende Partikelsammelvorrichtung 1 gründlich und zeitsparend zu reinigen, wobei auch in einem Außeneinsatz bzw. autarken Betrieb der Partikelsammelvorrichtung 1 zwischen Messungen zur Bestimmung der technischen Sauberkeit mehrere Reinigungen der Partikelsammelvorrichtung durchgeführt werden können werden können.

### Bezugszeichen

- 1: Partikelsammelvorrichtung
- 8: Unterdruckquelle
- 9: Unterdruckversorgungsleitung
- 11: Fliehkraftabscheider
- 12: Ansaugleitung
- 25: Filterhalter
- 52: Gewindeverbindung
- 62: Ansaugöffnung
- 92: Staubsauger

- 100: Aufnahme
- 101: Reinigungseinheit
- 102: Flüssigkeitsvorratseinheit
- 103: Adaptereinheit
- 104: Ventil
- 105: Verbindungsschlauch
- 106: Membransaugendabschnitt
- 123: luftdurchlässige Membran

## Patentansprüche

1. Partikelsammelvorrichtung (1) zum Sammeln von Partikeln von Oberflächen für eine Partikelanalyse im Rahmen der Prüfung der technischen Sauberkeit von Prüfkörpern, insbesondere Werkstücken, Maschinen und/oder Leiterplatten, in einem Saugbetriebsmodus der Partikelsammelvorrichtung (1), umfassend
eine Ansaugleitung (12), ausgebildet zum Ansaugen eines Partikel-/Luftgemisches von einer zu prüfenden Oberfläche und
eine Partikelsammeleinheit (120), ausgebildet zum Herausfiltern von angesaugten Partikeln des Partikel-/Luftgemisches vor dem Erreichen einer Unterdruckquelle (8),
**dadurch gekennzeichnet,**
**dass** die Partikelsammelvorrichtung (1) eine Reinigungseinheit (101) umfasst, die so ausgebildet ist, dass in einem Spülbetriebsmodus der Partikelsammelvorrichtung (1) die Partikelsammelvorrichtung (1), insbesondere die Ansaugleitung (12) und die Partikelsammeleinheit (120), durch das Ansaugen einer Reinigungsflüssigkeit, insbesondere Wasser, einer wässrigen Lösung oder demineralisiertem Wasser (VE-Wasser), durchspülbar ist, um im Saugbetriebsmodus festgesetzte Partikel auszuspülen.

2. Partikelsammelvorrichtung nach Anspruch 1,
**dadurch gekennzeichnet,**
**dass** die Partikelsammelvorrichtung (1) zum Sammeln der Partikel eine zweite Partikelsammeleinheit (121) umfasst,
wobei die erste Partikelsammeleinheit (120) als ein Filterhalter (25) oder als ein Fliehkraftabscheider (11) und die zweite Partikelsammeleinheit (121) als Filterhalter (25) ausgebildet ist und wobei der Filterhalter (25) zum Halten eines austauschbaren Analysefilters ausgebildet ist.

3. Partikelsammelvorrichtung nach Anspruch 2,
**dadurch gekennzeichnet,**
**dass** an dem Fliehkraftabscheider (11) die Ansaugleitung (12) zum Ansaugen des Partikel-/Luftgemisches von der zu prüfenden Oberfläche angeschlossen ist, derart, dass in dem Saugbetriebsmodus das angesaugte Partikel-/Luftgemisch im Fliehkraftabscheider (11) rotiert und die Partikel gegen eine Wandung schleuderbar und dadurch abscheidbar sind,
wobei der Fliehkraftabscheider (11) eine Aufnahme (100), insbesondere eine Gewindeverbindung (52) zum lösbaren Fixieren eines Auffangbehälters zum Sammeln der abgeschiedenen Partikel umfasst,
und **dass** der Fliehkraftabscheider (11) ein Tauchrohr umfasst, an dem eine Unterdruckversorgungsleitung (9) so angeschlossen ist, dass die im Saugbetriebsmodus aus dem Fliehkraftabscheider (11) abgesaugte und durch die Unterdruckversorgungsleitung (9) strömende Luft vor dem Erreichen der Unterdruckquelle (8) den in dem Filterhalter (25) angeordneten Analysefilter zum Zurückhalten der Partikel auf einer Partikelsammelfläche des Analysefilters durchströmt.

4. Partikelsammelvorrichtung nach Anspruch 3,
**dadurch gekennzeichnet,**
**dass** die Ansaugleitung (12) zum Fliehkraftabscheider (11) und die Unterdruckversorgungsleitung (9) zum Filterhalter (25) lösbar verbunden sind, wobei die Ansaugleitung (12) so ausgebildet ist, dass sie zur Unterdruckversorgungsleitung (9) austauschbar ist zum Durchführen des Spülbetriebsmodus bei einem fluidleitend überbrückten Fliehkraftabscheider (11).

5. Partikelsammelvorrichtung nach einem der vorherigen Ansprüche, **dadurch gekennzeichnet,**
**dass** die Reinigungseinheit (101) eine Flüssigkeitsvorratseinheit (102) umfasst, ausgebildet zum Bereitstellen einer Reinigungsflüssigkeit, insbesondere von Wasser, einer wässrigen Lösung oder demineralisiertem Wasser (VE-Wasser), die insbesondere lösbar oder als separates Bauteil zur Partikelsammelvorrichtung (1) ausgebildet ist und/oder
**dass** die Flüssigkeitsvorratseinheit (102) ein Fassungsvermögen von 5l, bevorzugt 3l, besonders bevorzugt 2l, ganz besonders bevorzugt 1l umfasst.

6. Partikelsammelvorrichtung nach Anspruch 5,
**dadurch gekennzeichnet,**
**dass** die Flüssigkeitsvorratseinheit (102) so mit der Ansaugleitung (12) in Wirkverbindung steht, dass die Reinigungsflüssigkeit in dem Spülbetriebsmodus mittels der Ansaugleitung (12) ansaugbar ist.

7. Partikelsammelvorrichtung nach Anspruch 3 bis 6,
**dadurch gekennzeichnet,**
**dass** die Reinigungseinheit (101) eine Adaptereinheit (103) umfasst, ausgebildet zum lösbaren Verbinden mit dem Fliehkraftabscheider (11) über die Aufnahme (100) zum Ersetzen des lösbar am Fliehkraftabscheider (11) fixierten Auffangbehälters.

8. Partikelsammelvorrichtung nach Anspruch 7,
**dadurch gekennzeichnet,**
**dass** die Adaptereinheit (103) einen ein schaltbares Ventil (104) aufweisenden Verbindungsschlauch (105) umfasst, wobei das Ventil (104) zwischen einem fluidleitenden Zustand und einem fluidsperrenden Zustand verschaltbar ist.

9. Partikelsammelvorrichtung nach Anspruch 8,
**dadurch gekennzeichnet,**
**dass** der Verbindungsschlauch (105) im fluidleitenden Zustand des Ventils (104) einen fluidleitenden Kanalabschnitt (122) zwischen dem Fliehkraftabscheider (11) und der Unterdruckquelle (8), insbesondere dem Filterhalter (25), ausbildet, wobei insbesondere das Ventil (104) im Spülbetriebsmodus im fluidsperrenden Zustand verschaltet ist.

10. Partikelsammelvorrichtung nach einem der vorhergehenden Ansprüche,
**dadurch gekennzeichnet,**
**dass** die Reinigungseinheit (101) einen Membransaugendabschnitt (106) umfasst, ausgebildet zum saugluftleitenden Verbinden mit der Ansaugleitung (12) in einem verbundenen Zustand, wobei in dem verbundenen Zustand eine von der Ansaugleitung (12) ausgebildete Ansaugöffnung (62) zum Ansaugen des Partikel-/Luftgemisches durch eine luftdurchlässige Membran (123) abgedeckt ist zum Ansaugen eines reinen, insbesondere keine Partikel umfassenden, Luftgemisches.

11. Partikelsammelvorrichtung nach Anspruch 10,
**dadurch gekennzeichnet,**
**dass** die Partikelsammelvorrichtung (1) neben dem Spülbetriebsmodus auch einen Trockenbetriebsmodus umfasst, wobei im Trockenbetriebsmodus der Membransaugendabschnitt (106) mit der Ansaugleitung (12) saugluftleitend verbunden ist und wobei im Spülbetriebsmodus der Membransaugendabschnitt (106) zum Ansaugen der Reinigungsflüssigkeit saugluftleitend überbrückt und/oder nicht saugluftleitend verbunden ist.

12. Partikelsammelvorrichtung nach einem der vorhergehenden Ansprüche,
**dadurch gekennzeichnet,**
**dass** die Partikelsammelvorrichtung (1) Steuermittel (107) umfasst, die dahingehend ausgebildet sind, dass
in dem Spülbetriebsmodus das Ventil (104) in den fluidsperrenden Zustand verschaltet ist und die Reinigungsflüssigkeit, insbesondere 1l der Reinigungsflüssigkeit, aus der Flüssigkeitsvorratseinheit (102) durch die Ansaugleitung (12) ansaugbar ist zum Durchspülen der Partikelsammelvorrichtung (1), insbesondere der das Partikel-/Luftgemisch führenden Baugruppen, insbesondere der Ansaugleitung (12), des das Tauchrohr umfassenden Fliehkraftabscheiders (11), der Unterdruckversorgungsleitung (9) und/oder des Filterhalters (25)
und **dass** in dem Trockenbetriebsmodus das Ventil (25) in den fluidleitenden Zustand verschaltet ist und Luft von der Ansaugleitung (12) durch den Membransaugendabschnitt (106) ansaugbar ist.

13. Reinigungsverfahren zum Reinigen einer Partikelsammelvorrichtung (1) nach wenigstens Anspruch 1, **gekennzeichnet durch** folgende Verfahrensschritte:
- die Reinigungseinheit (101) wird in Wirkkontakt mit der Partikelsammelvorrichtung (1) gebracht;
- die Ansaugleitung (12) und eine Partikelsammeleinheit (120) werden in einem Spülbetriebsmodus durch das Ansaugen der Reinigungsflüssigkeit durchgespült.

14. Reinigungsverfahren nach Anspruch 13,
**gekennzeichnet durch**
- ein Fliehkraftabscheider (11) und/oder ein Filterhalter (25) wird mit der Reinigungsflüssigkeit durchspült, um festgesetzte Partikel auszuspülen.

15. Reinigungsverfahren nach Anspruch 13 oder 14,
umfassend die folgenden Verfahrensschritte:
- ein Analysefilter wird aus dem Filterhalter (25) entfernt;
- die Ansaugleitung (12) wird mit einer die Reinigungsflüssigkeit umfassenden Flüssigkeitsvorratseinheit (102) in Wirkkontakt gebracht;
- eine Adaptereinheit (103) wird mittels einer Aufnahme (100) des Fliehkraftabscheiders (11) in Wirkkontakt mit dem Fliehkraftabscheider (11) gebracht;
- ein freies Ende eines Verbindungsschlauchs (105) wird mit der Unterdruckquelle (8), insbesondere dem Filterhalter (25), fluidleitend verbunden, wobei das andere Ende des Verbindungsschlauchs (105) in der Adaptereinheit (103) mündet;
- ein Ventil (104), das in dem Verbindungsschlauch (105) angeordnet ist, wird in einen fluidsperrenden Zustand verschaltet;
- ein Spülbetriebsmodus der Partikelsammelvorrichtung (1) zum Ansaugen der Reinigungsflüssigkeit, insbesondere von 1l Reinigungsflüssigkeit, mit der Ansaugleitung (12) wird aktiviert;
- der Spülbetriebsmodus wird deaktiviert;
- ein Membransaugendabschnitt (106) wird mit der Ansaugleitung (12) verbunden;
- das Ventil (104) wird in den fluidleitenden Zustand verschaltet;
- der Trockenbetriebsmodus zum Absaugen von Flüssigkeitsrückständen aus der Partikelsammelvorrichtung (1) und zum Abführen von in dem Fliehkraftabscheider (11) aufgestauter Flüssigkeit über den Verbindungsschlauch (105) wird aktiviert;
- der Trockenbetriebsmodus wird deaktiviert.

## Claims

1. A particle collecting device (1) for collecting particles from surfaces for a particle analysis when testing the technical cleanliness of test objects, in particular work pieces, machines and/or printed circuit boards, in a suction mode of the particle collecting device (1), the particle collecting device (1) comprising:
a suction line (12) configured for aspirating a particle/air mixture from a surface to be tested; and
a particle collection unit (120) configured to filter out aspirated particles of the particle/air mixture before it reaches a vacuum source (8),
**characterized in that**
the particle collecting device (1) comprises a cleaning unit (101) configured in such a manner that the particle collecting device (1), in particular the suction line (12) and the particle collection unit (120), can be rinsed in a rinsing mode of the particle collecting device (1) by aspirating a cleaning liquid, in particular water, an aqueous solution or demineralized water, in order to flush out particles accumulated during suction mode.

2. The particle collecting device according to claim 1,
**characterized in that**
the particle collecting device (1) comprises a second particle collection unit (121) for collecting the particles,
the first particle collection unit (120) being a filter holder (25) or a centrifugal separator (11), and the second particle collection unit (121) being a filter holder (25), and the filter holder (25) being configured to hold an exchangeable analysis filter.

3. The particle collecting device according to claim 2,
**characterized in that**
the suction line (12) for aspirating the particle/air mixture from the surface to be tested is connected to the centrifugal separator (11) in such a manner that the aspirated particle/air mixture rotates in the centrifugal separator (11) and the particles can be flung against a wall and thus be separated in suction mode,
the centrifugal separator (11) comprising a seat (100), in particular a threaded connection (52), for attaching a collecting vessel for collecting the separated particles in a detachable manner,
and that the centrifugal separator (11) comprises an immersion tube to which a vacuum supply line (9) is connected in such a manner that the air suctioned out of the centrifugal separator (11) and flowing through the vacuum supply line (9) in suction mode flows through the analysis filter, which is disposed in the filter holder (25) and serves to retain the particles on a particle collecting surface of the analysis filter, before reaching the vacuum source (8).

4. The particle collecting device according to claim 3,
**characterized in that**
the suction line (12) is connected to the centrifugal separator (11) in a detachable manner, and the vacuum supply line (9) is connected to the filter holder (25) in a detachable manner, the suction line (12) being configured in such a manner that it can be replaced with the vacuum supply line (9) in order to implement the rinsing mode while the centrifugal separator (11) is bypassed in a fluid-conducting manner.

5. The particle collecting device according to any one of the preceding claims,
**characterized in that**
the cleaning unit (101) comprises a liquid storage unit (102) configured to provide a cleaning liquid, in particular water, an aqueous solution or demineralized water, which is in particular detachable or a separate component from the particle collecting device (1), and/or the liquid storage unit (102) has a storage capacity of 5 l, preferably 3 l, particularly preferably 2 l, most preferably 1 l.

6. The particle collecting device according to claim 5,
**characterized in that**
the liquid storage unit (102) is in operative connection with the suction line (12) in such a manner that the cleaning liquid can be aspirated by means of the suction line (12) in rinsing mode.

7. The particle collecting device according to claim 3 to 6,
**characterized in that**
the cleaning unit (101) comprises an adapter unit (103) configured for being connected to the centrifugal separator (11) in a detachable manner via the seat (100) for exchanging the collecting vessel attached to the centrifugal separator (11) in a detachable manner.

8. The particle collecting device according to claim 7,
**characterized in that**
the adapter unit (103) comprises a connecting hose (105) having a switchable valve (104), the valve (104) being switchable between a fluid-conducting state and a fluid-blocking state.

9. The particle collecting device according to claim 8,
**characterized in that**
the connecting hose (105) forms a fluid-conducting channel section (122) between the centrifugal separator (11) and the vacuum source (8), in particular the filter holder (25), when the valve (104) is in the fluid-conducting state, the valve (104) in particular being switched to the fluid-blocking state in rinsing mode.

10. The particle collecting device according to any one of the preceding claims,
**characterized in that**
the cleaning unit (101) comprises a membrane suction end portion (106) configured to be connected to the suction line (12) in a suction-air-conducting manner when in a connected state, a suction opening (62) formed by the suction line (12) and serving to aspirate the particle/air mixture being covered by an air-permeable membrane (123) in the connected state for aspirating a pure air mixture, which in particular contains no particles.

11. The particle collecting device according to claim 10,
**characterized in that**
the particle collecting device (1) comprises a dry mode in addition to the rinsing mode, the membrane suction end portion (106) being connected to the suction line (12) in a suction-air-conducting manner in dry mode, and the membrane suction end portion (106) being bypassed in a suction-air-conducting manner and/or not being connected in a suction-air-conducting manner for aspirating the cleaning liquid in rinsing mode.

12. The particle collecting device according to any one of the preceding claims,
**characterized in that**
the particle collecting device (1) comprises control means (107) configured to the effect that:
in rinsing mode, the valve (104) is switched to the fluid-blocking state and the cleaning liquid, in particular 1 l of the cleaning liquid, can be aspirated from the liquid storage unit (102) through the suction line (12) for rinsing the particle collecting device (1), in particular the modules transporting the particle/air mixture, in particular the suction line (12), the centrifugal separator (11), which comprises the immersion tube, the vacuum supply line (9) and/or the filter holder (25); and
in dry mode, the valve (25) is switched to the fluid-conducting state and the suction line (12) can aspirate air through the membrane suction end portion (106).

13. A cleaning method for cleaning a particle collecting device (1) according to at least claim 1, the cleaning method being **characterized by** the following steps:
- bringing the cleaning unit (101) into operative contact with the particle collecting device (1);
- rinsing the suction line (12) and a particle collection unit (120) by aspirating the cleaning liquid in a rinsing mode.

14. The cleaning method according to claim 13,
**characterized by**
rinsing a centrifugal separator (11) and/or a filter holder (25) with the cleaning liquid in order to flush out accumulated particles.

15. The cleaning method according to claim 13 or 14,
comprising the following steps:
- removing an analysis filter from the filter holder (25);
- bringing the suction line (12) into operative contact with a liquid storage unit (102) containing the cleaning liquid;
- bringing an adapter unit (103) into operative contact with the centrifugal separator (11) by means of a seat (100) of the centrifugal separator (11);
- connecting a free end of a connecting hose (105) to the vacuum source (8), in particular the filter holder (25), in a fluid-conducting manner, the other end of the connecting hose (105) ending in the adapter unit (103);
- switching a valve (104) disposed in the connecting hose (105) to a fluid-blocking state;
- activating a rinsing mode of the particle collecting device (1) for aspirating the cleaning liquid, in particular 1 l of cleaning liquid, using the suction line (12);
- deactivating the rinsing mode;
- connecting a membrane suction end portion (106) to the suction line (12);
- switching the valve (104) to the fluid-conducting state;
- activating the dry mode for suctioning fluid residue out of the particle collecting device (1) and for discharging liquid backed up in the centrifugal separator (11) via the connecting hose (105);
- deactivating the dry mode.

## Revendications

1. Dispositif de collecte de particules (1) pour collecter des particules sur des surfaces pour une analyse de particules dans le cadre de la vérification de la propreté technique d'objets à examiner, notamment de pièces à fabriquer, de machines et/ou de circuits imprimés, en mode aspiration du dispositif de collecte de particules (1), le dispositif de collecte de particules (1) comprenant :
une conduite d'aspiration (12) configurée pour aspirer un mélange particules/air sur une surface à examiner; et
une unité de collecte de particules (120) configurée pour filtrer des particules aspirées dans la mélange particules/air avant qu'il atteigne une source de vide (8),
**caractérisé en ce que**
le dispositif de collecte de particules (1) comprend une unité de nettoyage (101) configurée de telle manière que le dispositif de collecte de particules (1), notamment la conduite d'aspiration (12) et l'unité de collecte de particules (120), peut être rincé en mode rinçage du dispositif de collecte de particules (1) en aspirant un liquide de nettoyage, notamment de l'eau, une solution aqueuse ou de l'eau déminéralisée, afin d'éliminer des particules accumulées en mode aspiration.

2. Dispositif de collecte de particules selon la revendication 1,
**caractérisé en ce que**
le dispositif de collecte de particules (1) comprend une deuxième unité de collecte de particules (121) pour collecter les particules,
la première unité de collecte de particules (120) étant un porte-filtre (25) ou un séparateur à cyclone (11) et la deuxième unité de collecte de particules (121) étant un porte-filtre (25) et le porte-filtre (25) étant configurer pour porter un filtre d'analyse changeable.

3. Dispositif de collecte de particules selon la revendication 2,
**caractérisé en ce que**
la conduite d'aspiration (12) pour aspirer la mélange particules/air sur la surface à examiner est liée au séparateur à cyclone (11) de telle manière qu'en mode aspiration, le mélange particules/air aspiré tourne dans le séparateur à cyclone (11) et les particules peuvent être projetées contre une paroi et séparées ainsi,
le séparateur à cyclone (11) comprenant un logement (100), notamment un raccord fileté (52), pour attacher de manière détachable un récipient collecteur servant à collecter les particules séparées,
et **en ce que** le séparateur à cyclone (11) comprend un tube plongeur auquel une conduite d'alimentation en vide (9) est liée de telle manière que l'air aspiré dans le séparateur à cyclone (11) et s'écoulant par la conduite d'alimentation en vide (9) en mode aspiration s'écoule au travers du filtre d'analyse, qui est disposé dans le porte-filtre (25) et sert à retenir les particules sur une surface de collecte de particules du filtre d'analyse, avant qu'il atteigne la source de vide (8).

4. Dispositif de collecte de particules selon la revendication 3,
**caractérisé en ce que**
la conduite d'aspiration (12) est lié de manière détachable au séparateur à cyclone (11) et la conduite d'alimentation en vide (9) est liée de manière détachable au porte-filtre (25), la conduite d'aspiration (12) étant configurée de telle manière qu'elle peut être remplacée par la conduite d'alimentation en vide (9) afin d'implémenter le mode rinçage tandis que le séparateur à cyclone (11) est contourné de manière conductrice de fluide.

5. Dispositif de collecte de particules selon l'une quelconque des revendications précédentes,
**caractérisé en ce que**
l'unité de nettoyage (101) comprend une unité de stockage de liquide (102) configurée pour fournir un liquide de nettoyage, notamment de l'eau, une solution aqueuse ou de l'eau déminéralisé, qui est notamment détachable ou un composant séparé du dispositif de collecte de particules (1), et/ou
l'unité de stockage de liquide (102) a une capacité de stockage de 5 l, de préférence 3 l, de préférence particulière 2 l, ou mieux 1 l.

6. Dispositif de collecte de particules selon la revendication 5,
**caractérisé en ce que**
l'unité de stockage de liquide (102) est en liaison active avec la conduite d'aspiration (12) de telle manière que le liquide de nettoyage peut être aspiré au moyen de la conduite d'aspiration (12) en mode rinçage.

7. Dispositif de collecte de particules selon les revendications 3 à 6,
**caractérisé en ce que**
l'unité de nettoyage (101) comprend une unité d'adaptateur (103) configurée pour être liée de manière détachable au séparateur à cyclone (11) par le logement (100) pour changer le récipient collecteur attaché de manière détachable au séparateur à cyclone (11).

8. Dispositif de collecte de particules selon la revendication 7,
**caractérisé en ce que**
l'unité d'adaptateur (103) comprend un tuyau de connexion (105) ayant une vanne commutable (104), la vanne (104) pouvant être commutée entre un état de communication fluidique et un état de blocage de fluide.

9. Dispositif de collecte de particules selon la revendication 8,
**caractérisé en ce que**
le tuyau de connexion (105) forme une section de conduite (122) de communication fluidique entre le séparateur à cyclone (11) et la source de vide (8), notamment le porte-filtre (25), quand la vanne (104) est en état de communication fluidique, la vanne (104) étant commutée notamment à l'état de blocage de fluide en mode rinçage.

10. Dispositif de collecte de particules selon l'une quelconque des revendications précédentes,
**caractérisé en ce que**
l'unité de nettoyage (101) comprend une partie d'extrémité d'aspiration à membrane (106) configurée pour être liée à la conduite d'aspiration (12) de manière conductrice d'air aspiré en état lié, une ouverture d'aspiration (62) formée par la conduite d'aspiration (12) et servant à aspirer le mélange particules/air étant couverte par une membrane (123) perméable à l'air en état lié pour aspirer un mélange d'air pur, qui ne contient notamment aucunes particules.

11. Dispositif de collecte de particules selon la revendication 10,
**caractérisé en ce que**
le dispositif de collecte de particules (1) comprend un mode sec en plus du mode rinçage, la partie d'extrémité d'aspiration à membrane (106) étant liée à la conduite d'aspiration (12) de manière conductrice d'air aspiré en mode sec et la partie d'extrémité d'aspiration à membrane (106) étant contournée de manière conductrice d'air aspiré et/ou n'étant pas liée de manière conductrice d'air aspiré pour aspirer le liquide de nettoyage en mode rinçage.

12. Dispositif de collecte de particules selon l'une quelconque des revendications précédentes,
**caractérisé en ce que**
le dispositif de collecte de particules (1) comprend des moyens de commande (107) configurés de telle manière
qu'en mode rinçage, la vanne (104) est commutée à l'état de blocage de fluide et le liquide de nettoyage, notamment 1 l du liquide de nettoyage, peut être aspiré dans l'unité de stockage de liquide (102) par la conduite d'aspiration (12) pour rincer le dispositif de collecte de particules (1), notamment les modules transportant le mélange particules/air, notamment la conduite d'aspiration (12), le séparateur à cyclone (11), qui comprend le tube plongeur, la conduite d'alimentation en vide (9) et/ou le porte-filtre (25) et
qu'en mode sec, la vanne (25) est commutée à l'état de communication fluidique et la conduite d'aspiration (12) peut aspirer de l'air par la partie d'extrémité d'aspiration à membrane (106).

13. Procédé de nettoyage pour nettoyer un dispositif de collecte de particules (1) selon au moins la revendication 1, le procédé de nettoyage étant **caractérisé par** les étapes consistant à :
- mettre l'unité de nettoyage (101) en contact actif avec le dispositif de collecte de particules (1),
- rincer la conduite d'aspiration (12) et une unité de collecte de particules (120) en spirant le liquide de nettoyage en mode rinçage.

14. Procédé de nettoyage selon la revendication 13,
**caractérisé par** l'étape consistant à
rincer un séparateur à cyclone (11) et/ou un porte-filtre (25) avec le liquide de nettoyage afin d'éliminer des particules accumulées.

15. Procédé de nettoyage selon la revendication 13 ou 14, comprenant les étapes consistant à:
- enlever un filtre d'analyse du porte-filtre (25);
- mettre la conduite d'aspiration (12) en contact actif avec une unité de stockage de liquide (102) contenant le liquide de nettoyage;
- mettre une unité d'adaptateur (103) en contact actif avec le séparateur à cyclone (11) par l'intermédiaire d'un logement (100) du séparateur à cyclone (11);
- lier une extrémité libre d'un tuyau de connexion (105) à la source de vide (8), notamment au porte-filtre (25), de manière conductrice de fluide, l'autre extrémité du tuyau de connexion (105) débouchant dans l'unité d'adaptateur (103);
- commuter une vanne (104) disposée dans le tuyau de connexion (105) à un état de blocage de fluide;
- activer un mode rinçage du dispositif de collecte de particules (1) afin d'aspirer le liquide de nettoyage, notamment 1 l du liquide de nettoyage, en utilisant la conduite d'aspiration (12);
- désactiver le mode rinçage;
- lier une partie d'extrémité d'aspiration à membrane (106) à la conduite d'aspiration (12);
- commuter la vanne (104) à l'état de communication fluidique;
- activer le mode sec afin d'aspirer du fluide résiduel du dispositif de collecte de particules (1) et d'évacuer du liquide retenue dans le séparateur à cyclone (11) par le tuyau de connexion (105);
- désactiver le mode sec.
